# EUROPÄISCHE PATENTSCHRIFT

(11) **EP 0 429 889 B1**
(45) Veröffentlichungstag und Bekanntmachung des Hinweises auf die Patenterteilung: **08.11.1995**
(21) Anmeldenummer: 90121128.4
(22) Anmeldetag: 05.11.1990
(51) Int. Cl.: H04L 25/49

(54) **Zusatzsignalübertragung in einem Übertragungssystem für digitale Signale hoher Bitfolgefrequenz**
Auxiliary signal transmission in transmission systems for high bit-rate digital signals
Transmission d'un signal auxiliaire dans un système de transmission pour signaux numériques à grand débit

(30) Priorität: 30.11.1989 DE 3939640
(43) Veröffentlichungstag der Anmeldung: 05.06.1991
(73) Patentinhaber: SIEMENS AKTIENGESELLSCHAFT, 80333 München (DE)
(72) Erfinder: Stummer, Dipl.-Ing. (TU), W-8000 München 90 (DE); Thanhäuser, Gerhard, Dipl.-Ing. (TU), W-8905 Mering (DE); Fütterer, Augustin, Dipl.-Ing. (FH), W-8057 Eching (DE)

(56) Entgegenhaltungen:
- EP-A- 0 176 015
- DE-A- 3 723 187
- TELCOM REPORT Bd. 12, Nr. 6, November 1989, MUNCHEN DE Seiten 192 - 195 DöMER UND THANHÄUSER 'Mehr Platz auf dem Lichtwellenleiter'

## Beschreibung

Die Erfindung betrifft ein Verfahren zur zusätzlichen Übertragung eines digitalen Signals entsprechend dem Oberbegriffs des Anspruchs 1.

Aus der DE-A1-33 30 683 ist ein Übertragungssystem für digitale Signale hoher Schrittgeschwindigkeit bekannt, bei dem zusätzlich ein Signal vergleichsweise niedriger Schrittgeschwindigkeit mitübertragen wird. Das bekannte Übertragungssystem enthält in den Leitungsendgeräten Codeumsetzer, die das zu übertragende digitale Signal in den eigentlichen Übertragungscode, insbesondere in einen 4B 3T-Code oder einen 5B 6B-Code sendeseitig umsetzen und empfangsseitig rückumsetzen. Im sendeseitigen Codeumsetzer wird das benötigte Taktsignal mittels einer Phasenregelschleife erzeugt und zur Übertragung des Zusatzsignals die Regelspannung der Phasenregelschleife zusätzlich amplitudenmoduliert und damit über das Taktsignal die an die Strecke abgegebenen Signale phasenmoduliert. Empfangsseitig wirkt der in der Phasenregelschleife für die Takterzeugung enthaltene Phasendiskriminator auch als Demodulator für die Zusatzsignale, die am Phasendiskriminatorausgang entnehmbar sind. Die Übertragungskapazität für ein Zusatzsignal ist bei diesem Stand der Technik beschränkt, da ein zu großer Phasenhub einen erheblichen unerwünschten Jitter erzeugen würde, der dann einen zusätzlichen Aufwand für die Beseitigung des Jitters bzw. der Auswirkungen auf die Nutzsignalübertragung erfordern würde. Im Hinblick auf eine leichte Integrierbarkeit ist eine Phasenmodulation unerwünscht, da diese nur in seltenen Fällen mit digitalen Bausteinen erzeugt werden kann.

Aus der DE-A-37 23 187 ist bereits ein Verfahren und eine Anordnung für ein digitales Nachrichtenübertragungssystem bekannt, bei dem die Übertragungssignale im CMI-Code vorliegen. Zur zusätzlichen Übertragung eines digitalen Signals mit gegenüber dem Hauptsignal vergleichsweise niedriger Bitfolgefrequenz werden auf der Sendeseite durch das zusätzlich zu übertragende Signal Coderegelverletzungen erzeugt, die synchron zum Takt des Hauptsignals sind. Auf der Empfangsseite werden periodisch auftretende Coderegelverletzungen als zusätzlich übertragenes Signal, aperiodische Coderegelverletzungen jedoch als Übertragungsfehler gewertet.

Auch aus der EP-A-0 176 015 ist ein Verfahren zur zusätzlichen Übertragung von Informationen über einen digitalen Hilfskanal bekannt, bei dem bestimmte ausgewählte Bitmuster durch modifizierte Bitmuster ersetzt werden, wobei vorausgesetzt wird, daß die verwendeten Bitmuster eine gewisse und ausreichende Auftrittswahrscheinlichkeit besitzen.

Die Aufgabe der Erfindung besteht also darin, ein Verfahren der eingangs erwähnten Art so weiterzuentwickeln, daß die Zusatzsignalübertragung unabhängig und damit auch asynchron von der Übertragung des Hauptsignals bei möglichst hoher Fehlerfreiheit erfolgt, außerdem muß die empfangsseitige Erzeugung eines Taktsignals aus den empfangenen Übertragungssignalen weiterhin mit der benötigten Genauigkeit möglich sein.

Erfindungsgemäß wird die Aufgabe durch ein Verfahren der eingangs erwähnten Art gelöst, das durch die Merkmale des Kennzeichens des Patentanspruchs 1 weitergebildet ist. Von besonderem Vorteil beim erfindungsgemäßen Verfahren ist die Möglichkeit, normale Übertragungsfehler von den künstlich eingefügten Coderegelverletzungen unterscheiden zu können, so daß auch weiterhin die Fehlerhäufigkeit im digitalen Nutzsignal am Ende der Übertragungsstrecke gemessen werden kann. Zwei alternative Möglichkeiten zur Weiterbildung des erfindungsgemäßen Verfahrens sind in den Patentansprüchen 2 und 3 näher beschrieben, während in den Patentansprüchen 4 bis 6 eine bevorzugte Ausbildung des erfindungsgemäßen Verfahrens detailliert beschrieben ist. Bei diesen Aus- und Weiterbildungen des erfindungsgemäßen Verfahrens ergibt sich als besonderer Vorteil, daß die spektralen Eigenschaften des verwendeten CMI-Codes, also insbesondere Gleichstromfreiheit und hohe Taktinformation, durch die Zusatzsignalübertragung nicht wesentlich verschlechtert werden.

Die Erfindung soll im folgenden anhand eines Ausführungsbeispiels und mit Hilfe einer Zeichnung näher erläutert werden. Dabei zeigt
- Fig. 1: ein Beispiel für eine Einblendung eines Zusatzbits in die Übertragung der digitalen Nutzsignale und
- Fig. 2: ein Schema für die Zusatzsignaleinblendung bei der Umcodierung der digitalen Nutzsignale von einem 3Bit-Binärcode in den CMI-Code.

Die im CMI-Code vorliegenden Übertragungssignale werden in der Regel aus binären Signalen durch Umcodierung erzeugt. Dabei wird ein binäres Nullzeichen bei der Umcodierung in eine aus einem Nullbit und einem Einsbit bestehende Elementkombination umgeformt, während ein binäres Einszeichen bei der Umcodierung, sofern das letzte binäre Einszeichen als Doppelnullzeichen codiert wurde, zu einem Doppeleinszeichen und, falls das letzte binäre Einszeichen als Doppeleinszeichen codiert wurde, zu einem Doppelnullzeichen umgeformt. Diese Zuordnung bzw. die Zeichen werden verändert, wenn im mit zu übertragenden Zusatzsignal ein Einsbit beginnt. Anstelle des Beginns eines Einsbits des Zusatzsignals könnte auch der Beginn eines Nullbit gewählt werden, der Beginn eines Einsbits ist aber leichter erkennbar, so daß beim Ausführungsbeispiel diese Variante bevorzugt wurde. Zur Sicherheit gegen die Verwechslung von durch Übertragungsfehler verursachten Coderegelverletzungen von den zur Zusatzsignalübertragung erzeugten absichtlichen Coderegelverletzungen wird entsprechend der Erfindung die Coderegelverletzung nicht auf eine Elementkombination im CMI-Code beschränkt, sondern mit Beginn eines Einsbits des Zusatzsignals wird eine erste verbotene Elementkombination, die also der CMI-Coderegel widerspricht, ausgesendet, auf die eine erste reguläre Elementkombination und eine zweite verbotene Elementkombination folgen. Damit ergibt sich eine charakteristische Doppelverletzung des CMI-Codes, die eine reguläre Elementkombination einschließt. Eine derartige Veränderung des CMI-Übertragungssignals ist durch einen einzigen Übertragungsfehler nicht und durch mehrere Übertragungsfehler nur schwer vorzutäuschen, so daß damit absichtliche Coderegelverletzungen von durch Übertragungsfehlern entstandene Coderegelverletzungen empfangsseitig leicht erkannt und damit getrennt werden können.

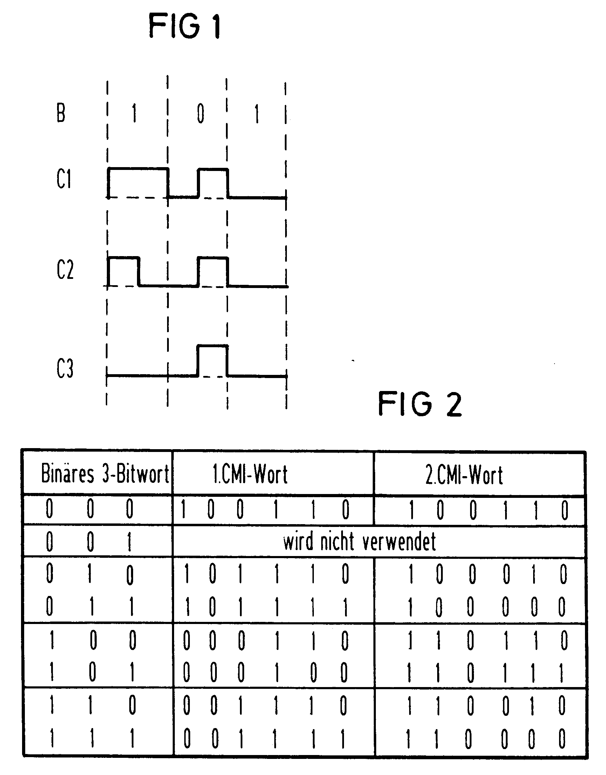

In der Figur 1 ist in der mit B bezeichneten obersten Zeile eine aus drei Binärzeichen bestehende Bitfolge dargestellt, die in den CMI-Code umzucodieren ist. In der mit C1 bezeichneten Zeile sind die bei einer regulären Umcodierung in den CMI-Code auftretenden Impulse dargestellt, wobei angenommen wurde, daß das letzte umcodierte binäre Einsbit mit einem Doppelnullbit im CMI-Code wiedergegeben wurde. Im CMI-Code ergeben sich die Elementkombinationen 110100, wobei wie erkennbar - von NRZ-Signalen ausgegangen wurde, und die Impulse jeweils die gesamte Länge des Elements im CMI-Code - vergleichbar vollbitbreiten Signalen im Binärcodeausfüllen. In der mit C2 bezeichneten Zeile sind empfangene Elementkombinationen dargestellt, wobei in der ersten Elementkombination das zweite Element durch einen Übertragungsfehler verfälscht wurde. Dieser Übertragungsfehler ist empfangsseitig leicht erkennbar, da binäre Einsbits nur als Doppeleins bzw. Doppelnull-Elementkombinationen und ein binäres Nullbit nur durch eine Null-Eins-Elementkombination wiedergegeben wird. Die durch den Übertragungsfehler erzeugte Eins-Null-Elementkombination ist im vorgesehenen CMI-Code nicht enthalten, und damit als Übertragungsfehler zu erkennen. In der C3 bezeichneten Zeile ist bei der Umcodierung der Binärzeichenfolge B absichtlich eine doppelte Coderegelverletzung zur Markierung des Beginns eines Einsbits des Zusatzsignals eingeblendet worden. Die Doppelnull-Elementkombination entspricht zwar in der CMI-Coderegel der vorgesehenen Elementkombination für ein binäres Einsbit, wegen der angenommenen Vorgeschichte - die letzte binäre Eins sollte als Doppelnull-Elementkombination codiert worden sein - wurde aber mit der ersten Elementkombination die CMI-Coderegel verletzt. Die zweite Elementkombination entspricht der CMI-Coderegel, so daß bei dieser keine Coderegelverletzung vorliegt. Als dritte Elementkombination wurde wieder eine Doppelnull-Elementkombination erzeugt, obwohl auf die erste Doppelnull-Elementkombination eine Doppeleins-Elementkombination bei regulärer Umcodierung hätte folgen müssen. Damit ist empfangsseitig erkennbar, daß eine zweite Coderegelverletzung vorliegt, daß also insgesamt eine reguläre Elementkombination von zwei irregulären Elementkombinationen eingeschlossen wird.

Besondere Bedeutung hat die Umcodierung von aus mehreren Bit bestehenden Binärworten in CMI-Elementkombinationen.

In der Figur 2 ist ein Schema für die Zusatzsignaleinblendung bei der Umcodierung von binären Dreibit-Worten in aus drei Elementkombinationen bestehende CMI-Worte dargestellt. Das Schema ergibt sich dabei dadurch, daß man auch den nach der CMI-Coderegel verbotenen Elementkombinationen einen eindeutigen binären Signalinhalt zuordnet, daß man anstelle einer einzelnen Verletzung der CMI-Coderegel eine Doppelverletzung so vornimmt, daß das Auftreten dieser Doppelverletzung: Verletzung der CMI-Coderegel - Nichtverletzung - Verletzung - so vornimmt, daß eine Vortäuschung durch Übertragungsfehler extrem unwahrscheinlich ist und daß man nur den Beginn eines jeden Einsbits des Zusatzkanals in der beschriebenen Weise markiert. Durch die erheblich niedrigere Bitrate des Zusatzsignals einerseits und dadurch, daß man von dieser Bitrate nur den Beginn des Einsbits im digitalen Nutzsignal markiert, werden in der gewünschten Weise die spektralen Eigenschaften des CMI-Codes oder auch eines modifizierten CMI-Codes nur unwesentlich verändert. Im Schema sind den binären drei Bitworten jeweils ein erstes und ein zweites CMI-Codewort zugeordnet; das erste CMI-Codewort wird dann erzeugt, wenn die letzte Eins im CMI-Code mit einem Doppelnullbit wiedergegeben wurde, entsprechend wird das zweite CMI-Wort dann erzeugt, wenn die unmittelbar vorangehende letzte Eins im CMI-Code durch ein Doppeleinsbit wiedergegeben wurde. Ein aus einer Folge von drei binären Nullbits bestehendes digitales Nutzsignal ergibt als erstes und als zweites CMI-Wort die gleiche Folge aus einem Einsbit, zwei Nullbit, zwei Einsbit und einem Nullbit. Ein binäres Dreibit-Wort aus einer Folge von zwei Nullbit und einem Einsbit ist nicht vorgesehen, so daß dafür auch keine CMI-Worte vorgesehen wurden. Ein binäres Dreibit-Wort aus einer Folge von einem Nullbit, einem Einsbit und einem Nullbit ergibt als erstes CMI-Wort eine Folge aus einem Einsbit, einem Nullbit, drei Einsbit und einem Nullbit und als zweites CMI-Wort eine Folge aus einem Einsbit, drei Nullbit, einem Einsbit und einem Nullbit. Ein aus einer Folge von einem Nullbit und zwei Einsbit bestehendes binäres Dreibit-Wort ergibt als erstes CMI-Wort eine Folge aus einem Einsbit, einem Nullbit und vier Einsbit und als zweites CMI-Wort eine Folge aus einem Einsbit und fünf Nullbit. Ein aus einer Folge von einem Einsbit und zwei Nullbit bestehendes binäre Dreibit-Wort ergibt als erstes CMI-Wort eine Folge aus drei Nullbit, zwei Einsbit und einem Nullbit und als zweites CMI-Wort eine Folge aus zwei Einsbit, einem Nullbit, zwei Einsbit und einem Nullbit. Ein aus einer Folge von einem Einsbit, einem Nullbit und einem Einsbit bestehendes binäre Dreibit-Wort ergibt als erstes CMI-Wort eine Folge aus drei Nullbit, einem Einsbit und zwei Nullbit und als zweites CMI-Wort eine Folge aus zwei Einsbit, einem Nullbit und drei Einsbit. Ein aus einer Folge von zwei Einsbit und einem Nullbit bestehendes binäres Dreibit-Wort ergibt als erstes CMI-Wort eine Folge aus zwei Nullbit, drei Einsbit und einem Nullbit und als zweites CMI-Wort eine Folge aus zwei Einsbit, zwei Nullbit, einem Einsbit und einem Nullbit und ein aus drei Einsbit bestehendes binäres Dreibit-Wort ergibt als erstes CMI-Wort eine Folge aus zwei Nullbit und vier Einsbit und als zweites CMI-Wort eine Folge aus zwei Einsbit und vier Nullbit. Bei Vorliegen des aus einer Folge von zwei Nullbit und einem Einsbit bestehenden binären Dreibit-Wortes wird der Beginn eines Einsbit des Zusatzsignals nicht sofort eingeblendet, sondern erst beim nächsten Bit des digitalen Nutzsignales. Das dann vorliegende Dreibit-Wort beginnt mit der erlaubten Kombination von Null und Eins und ermöglicht damit die Einblendung des Zusatzsignales in der beschriebenen Weise. Der Grund für die Nichtverwendung des binären Dreibit-Wortes, bestehend aus zwei Nullen und einer Eins, für die Einblendung liegt darin, daß die Anwendung der speziellen beschriebenen Verletzungsregel zur Bildung von CMI-Codeelementen führt, die auch durch einen einzigen Übertragungsfehler aus einem regulären CMI-Signal entstehen können.

## Patentansprüche

1. Verfahren zur zusätzlichen Übertragung eines digitalen Signals mit vergleichsweise niedriger Bitfolgefrequenz zusammen mit dem in einem Kanal eines digitalen Übertragungssystems übertragenen digitalen Nutzsignal durch Einblendung des Zusatzsignals bei der Umcodierung des binären Nutzsignals in einen Übertragungs- oder Streckencode, bei dem das digitale Nutzsignal im CMI-Code übertragen wird und bei dessen Erzeugung im CMI-Code aus einem Binärcode wenigstens einer der nach der CMI-Coderegel verbotenen Elementkombinationen ein binärer Signalinhalt zugeordnet wird und die verbotene Elementkombination nur bei Beginn eines Bits des zusätzlichen digitalen Signals ausgesendet wird,
**dadurch gekennzeichnet**,
daß solche verbotenen Elementkombinationen ausgewählt werden, die nicht durch einen einzigen Übertragungsfehler aus einer regulären Elementkombination entstehen können.

2. Verfahren nach Patentanspruch 1,
**dadurch gekennzeichnet**,
daß bei Beginn eines Einsbits des zusätzlichen digitalen Signals eine erste verbotene Elementkombination ausgesendet wird, auf die eine erste reguläre Elementkombination und eine zweite verbotene Elementkombination folgen, so daß eine Doppelverletzung des CMI-Codes eine reguläre Elementkombination einschließt.

3. Verfahren nach Patentanspruch 1,
**dadurch gekennzeichnet**,
daß bei Beginn eines Nullbits des zusätzlichen digitalen Signals eine erste verbotene Elementkombination ausgesendet wird, auf die eine erste reguläre Elementkombination und eine zweite verbotene Elementkombination folgen, so daß eine Doppelverletzung des CMI-Codes eine reguläre Elementkombination einschließt.

4. Verfahren nach den Patentansprüchen 1, 2 oder 3,
**dadurch gekennzeichnet**,
daß die Elementkombinationen mittels NRZ-Impulsen übertragen werden.

5. Verfahren nach Patentansprüchen 1, 2 oder 4,
**dadurch gekennzeichnet,**
daß bei der Erzeugung von digitalen Nutzsignalen im CMI-Code aus binären Signalen eine binäre Null in Form eines Nullbit gefolgt von einem Einsbit als reguläre CMI-Elementkombination und als Folge eines Einsbit und eines Nullbit als verbotene Elementkombination wiedergegeben wird,
daß ein binäres Einsbit abhängig von der Codierung des letzten binären Einsbits als reguläre Elementkombination in Form eines Doppeleinsbits und als verbotene Elementkombination in Form eines Doppelnullbits erzeugt wird, wenn das letzte binäre Einsbit als Doppelnullbit erzeugt wurde und
daß, wenn das letzte binäre Einsbit als Doppeleinsbit erzeugt wurde, als reguläre Elementkombination ein Doppelnullbit und als verbotene Elementkombination ein Doppeleinsbit erzeugt wird.

6. Verfahren nach Patentanspruch 5,
**dadurch gekennzeichnet**,
daß bei der Erzeugung des digitalen Nutzsignals im CMI-Code aus binären Dreibitworten ein erstes CMI-Codewort dann erzeugt wird, wenn das letzte binäre Einsbit im CMI-Code als Doppelnullbit wiedergegeben wurde und ein zweites CMI-Codewort dann erzeugt wird, wenn das letzte binäre Einsbit im CMI-Code als Doppeleinsbit wiedergegeben wurde, und
daß bei einem aus einer Folge von drei binären Nullbits bestehenden Bitwort als erstes CMI-Codewort ein Einsbit gefolgt von zwei Nullbit, zwei Einsbit und einem Nullbit und als zweites CMI-Codewort ein Einsbit gefolgt von zwei Nullbit, zwei Einsbit und einem Nullbit, also das gleiche Codewort, erzeugt werden,
daß bei einem aus einer Folge von einem Nullbit, einem Einsbit und einem Nullbit bestehenden binären Dreibit-Wort als erstes CMI-Codewort eine Folge von einem Einsbit, einem Nullbit, drei Einsbit und einem Nullbit und als zweites CMI-Codewort eine Folge von einem Einsbit, drei Nullbit, einem Einsbit und einem Nullbit erzeugt werden,
daß bei einem aus einer Folge von einem Nullbit und zwei Einsbit bestehendem binären Dreibit-Wort als erstes CMI-Codewort eine Folge von einem Einsbit, einem Nullbit und vier Einsbit und als zweites CMI-Codewort eine Folge von einem Einsbit und fünf Nullbit erzeugt werden,
daß bei einem aus einer Folge von einem Einsbit und zwei Nullbit bestehenden binären Dreibit-Wort als erstes CMI-Codewort eine Folge von drei Nullbit, zwei Einsbit und ein Nullbit und als zweites CMI-Codewort eine Folge von zwei Einsbit, ein Nullbit, zwei Einsbit und ein Nullbit erzeugt werden,
daß bei einem aus einer Folge von einem Einsbit, einem Nullbit und einem Einsbit bestehenden binären Dreibitwort als erstes CMI-Codewort eine Folge von drei Nullbit, einem Einsbit und zwei Nullbit und als zweites CMI-Codewort eine Folge von zwei Einsbit, einem Nullbit und drei Einsbit erzeugt werden, daß bei einem aus einer Folge von zwei Einsbit und einem Nullbit bestehenden binären Dreibitwort als erstes CMI-Codewort eine Folge von zwei Nullbit, drei Einsbit und ein Nullbit und als zweites CMI-Codewort eine Folge von zwei Einsbit, zwei Nullbit, ein Einsbit und ein Nullbit erzeugt werden,
daß bei einem aus einer Folge von drei Einsbit bestehenden binären Dreibitwort als erstes CMI-Codewort eine Folge von zwei Nullbit und vier Einsbit und als zweites CMI-Codewort eine Folge von zwei Einsbit und vier Nullbit erzeugt werden und daß das aus einer Folge von zwei Nullbit und einem Einsbit bestehende binäre Dreibitwort nicht verwendet wird.

## Claims

1. Method for the additional transmission of a digital signal with comparatively low bit rate together with the digital wanted signal transmitted in one channel of a digital transmission system by insertion of the additional signal during the code conversion of the binary wanted signal into a transmission or link code, in which method the digital wanted signal is transmitted in the CMI code and, during the generation of said digital wanted signal in the CMI code from a binary code, a binary signal content is assigned to at least one of the element combinations forbidden according to the CMI code rule and the forbidden element combination is only transmitted at the beginning of a bit of the additional digital signal, characterized in that such forbidden element combinations which cannot arise from a regular element combination as a result of a single transmission error are selected.

2. Method according to Patent Claim 1, characterized in that at the beginning of a one-bit of the additional digital signal a first forbidden element combination is transmitted, which is followed by a first regular element combination and a second forbidden element combination, so that a double violation of the CMI code encloses a regular element combination.

3. Method according to Patent Claim 1, characterized in that at the beginning of a zero-bit of the additional digital signal a first forbidden element combination is transmitted, which is followed by a first regular element combination and a second forbidden element combination, so that a double violation of the CMI code encloses a regular element combination.

4. Method according to Patent Claims 1, 2 or 3, characterized in that the element combinations are transmitted by means of NRZ pulses.

5. Method according to Patent Claims 1, 2 or 4, characterized in that during the generation of digital wanted signals in the CMI code from binary signals a binary zero in the form of a zero-bit is followed by a one-bit as regular CMI element combination and is reproduced as a sequence of one one-bit and one zero-bit as forbidden element combination, in that, depending on the coding of the last binary one-bit, a binary one-bit is generated as regular element combination in the form of a double one-bit and as forbidden element combination in the form of a double zero-bit if the last binary one-bit was generated as a double zero-bit, and in that, if the last binary one-bit was generated as a double one-bit, a double zero-bit is generated as regular element combination and a double one-bit is generated as forbidden element combination.

6. Method according to Patent Claim 5, characterized in that during the generation of the digital wanted signal in the CMI code from binary three-bit words a first CMI code word is generated whenever the last binary one-bit in the CMI code was reproduced as a double zero-bit and a second CMI code word is generated whenever the last binary one-bit in the CMI code was reproduced as a double one-bit, and in that, in the case of a bit word comprising a sequence of three binary zero-bits, one one-bit followed by two zero-bits, two one-bits and one zero-bit is generated as first CMI code word, and one one-bit followed by two zero-bits, two one-bits and one zero-bit is generated as second CMI code word, that is to say the same code word, in that, in the case of a binary three-bit word comprising a sequence of one zero-bit, one one-bit and one zero-bit, a sequence of one one-bit, one zero-bit, three one-bits and one zero-bit is generated as first CMI code word, and a sequence of one one-bit, three zero-bits, one one-bit and one zero-bit is generated as second CMI code word, in that, in the case of a binary three-bit word comprising a sequence of one zero-bit and two one-bits, a sequence of one one-bit, one zero-bit and four one-bits is generated as first CMI code word, and a sequence of one one-bit and five zero-bits is generated as second CMI code word, in that, in the case of a binary three-bit word comprising a sequence of one one-bit and two zero-bits, a sequence of three zero-bits, two one-bits and one zero-bit is generated as first CMI code word, and a sequence of two one-bits, one zero-bit, two one-bits and one zero-bit is generated as second CMI code word, in that, in the case of a binary three-bit word comprising a sequence of one one-bit, one zero-bit and one one-bit, a sequence of three zero-bits, one one-bit and two zero-bits is generated as first CMI code word, and a sequence of two one-bits, one zero-bit and three one-bits is generated as second CMI code word, in that, in the case of a binary three-bit word comprising a sequence of two one-bits and one zero-bit, a sequence of two zero-bits, three one-bits and one zero-bit is generated as first CMI code word, and a sequence of two one-bits, two zero-bits, one one-bit and one zero-bit is generated as second CMI code word, in that, in the case of a binary three-bit word comprising a sequence of three one-bits, a sequence of two zero-bits and four one-bits is generated as first CMI code word, and a sequence of two one-bits and four zero-bits is generated as second CMI code word, and in that the binary three-bit word comprising a sequence of two zero-bits and one one-bit is not used.

## Revendications

1. Procédé pour la transmission supplémentaire d'un signal numérique possédant une fréquence de récurrence comparativement faible des bits, conjointement avec le signal utile numérique transmis dans un canal d'un système de transmission numérique, par insertion du signal supplémentaire lors du transcodage du signal binaire utile en un code de transmission ou un code de section, selon lequel le signal numérique utile est transmis dans le code CMI et, lors de sa production dans le code CMI à partir d'un code binaire, un contenu binaire du signal est associé à au moins l'une des combinaisons d'éléments, qui sont interdites selon la règle du code CMI, et la combinaison interdite d'éléments est émise uniquement au début d'un bit du signal numérique supplémentaire, caractérisé par le fait qu'on sélectionne de telles combinaisons interdites d'éléments, qui ne peuvent pas apparaître sous l'effet d'un seul défaut de transmission à partir d'une combinaison régulière d'éléments.

2. Procédé suivant la revendication 1, caractérisé par le fait qu'au début d'un bit un du signal numérique supplémentaire est émise une première combinaison interdite d'éléments, à laquelle succèdent une première combinaison régulière d'éléments et une seconde combinaison interdite d'éléments, en sorte qu'une violation double du code CMI inclut une combinaison régulière d'éléments.

3. Procédé suivant la revendication 1, caractérisé par le fait qu'au début d'un bit zéro du signal numérique supplémentaire est émise une première combinaison interdite d'éléments, à laquelle succèdent une première combinaison régulière d'éléments et une seconde combinaison interdite d'éléments, en sorte qu'une violation double du code CMI inclut une combinaison régulière d'éléments.

4. Procédé suivant la revendication 1, 2 ou 3, caractérisé par le fait que les combinaisons d'éléments sont transmises au moyen d'impulsions NRZ.

5. Procédé suivant les revendications 1, 2 ou 4, caractérisé par le fait que lors de la production des signaux numériques utiles dans le code CMI à partir de signaux binaires, un zéro binaire sous la forme d'un bit zéro, suivi par un bit un sont reproduits en tant que combinaison régulière d'éléments CMI, et une suite d'un bit un et d'un bit zéro est reproduite en tant que combinaison interdite d'éléments,
qu'un bit un binaire est produit en fonction du codage du dernier bit un binaire en tant que combinaison régulière d'éléments, sous la forme d'un bit un double et est produit en tant que combinaison interdite d'éléments sous la forme d'un bit nul double, lorsque le dernier bit un binaire a été produit sous la forme d'un bit nul double et
que, lorsque le dernier un binaire a été produit en tant que bit un double, un bit zéro double est produit en tant que combinaison régulière d'éléments et un bit un double est produit en tant que combinaison interdite d'éléments.

6. Procédé suivant la revendication 5, caractérisé par le fait que lors de la production du signal numérique utile dans le code CMI à partir de mots binaires à trois bits, un premier mot de code CMI est produit lorsque le dernier bit un binaire dans le code CMI a été reproduit en tant que bit zéro double, et un second mot de code CMI est produit lorsque le dernier bit un binaire dans le code CMI a été reproduit en tant que bit un double, et
que dans le cas d'un mot binaire constitué par une suite de trois bits zéro binaires, un bit un suivi de deux bits zéro, de deux bits un et d'un bit zéro sont produits en tant que premier mot de code CMI, et un bit un suivi de deux bits zéro, de deux bits un et d'un bit zéro, c'est-à-dire le même mot de code, sont produits en tant que second mot de code CMI,
que, dans le cas d'un mot binaire à trois bits constitué par une suite formée d'un bit zéro, d'un bit un et d'un bit zéro, une suite formée d'un bit un, d'un bit zéro, de trois bits un et d'un bit zéro est produite en tant que premier mot de code CMI, et une suite formée d'un bit un, de trois bits zéro, d'un bit un et d'un bit zéro est produite en tant que second mot de code CMI,
que, dans le cas d'un mot binaire à trois bits constitué par une suite formée d'un bit zéro et de deux bits un, une suite formée de deux bits un, d'un bit zéro et de quatre bits un est produite en tant que premier mot de code CMI, et une suite formée d'un bit un et de cinq bits zéro est produite en tant que second mot de code CMI,
que, dans le cas d'un mot binaire à trois bits constitué par une suite formée d'un bit un et de deux bits zéro, une suite constituée de trois bits zéro, de deux bits un et d'un bit zéro est formée en tant que premier mot de code CMI, et une suite formée de deux bits un, d'un bit zéro, de deux bits un et d'un bit zéro est produite en tant que second mot de code CMI,
que, dans le cas d'un mot binaire à trois bits constitué comme une suite formée par un bit un, un bit zéro et un bit un, une suite constituée par trois bits zéro, un bit un et deux bits zéro est formée en tant que mot de code CMI et une suite formée par deux bits un, un bit zéro et trois bits un est produite en tant que second mot de code CMI,
que, dans le cas d'un mot binaire à trois bits constitué par une suite formée de deux bits et d'un bit zéro, une suite constituée de deux bits zéro, de trois bits un et d'un bit zéro est produite en tant que premier mot de code CMI, et une suite formée de deux bits un, de deux bits zéro, d'un bit un et d'un bit zéro est produite en tant que second mot de code CMI, et
que, dans le cas d'un mot binaire à trois bits, constitué par une suite de trois bits un, une suite de deux bits zéro et de quatre bits un, est produite en tant que premier mot de code CMI, et une suite formée de deux bits un et de quatre bits zéro est produite en tant que second mot de code CMI, et que le mot binaire à trois bits constitué par une suite formée de deux bits zéro et d'un bit un, n'est pas utilisé.
